# EUROPEAN PATENT APPLICATION

(11) **EP 4 723 512 A1**
(43) Date of publication of application: **08.04.2026**
(21) Application number: 25200717.4
(22) Date of filing: 08.09.2025
(51) Int. Cl.: H04B 10/272, H04B 10/40

(54) **OPTICAL TRANSMISSION AND RECEPTION CARRIER**

(30) Priority: 01.10.2024 TW 113137568; 10.06.2025 TW 114121619; 31.07.2025 TW 114129149
(71) Applicant: Arcadyan Technology Corporation, Hsinchu City 30071 (TW)
(72) Inventor: HUANG, Chun-Hung, 300011 Hsinchu City (TW); CHEN, Kai-Wei, 300051 Hsinchu City (TW); CHANG, Chia-Sheng, 310647 Zhudong Township, Hsinchu County (TW); LEE, Hung-Yung, 300007 Hsinchu City (TW); LIOU, Yu-Fan, 351 Toufen City, Miaoli County (TW)
(74) Representative: Krauns, Christian

(57) **Abstract**

An optical transmission and reception carrier includes an optical fiber, an invisible light transmitter, an invisible light receiver, a visible light transmitter and a fiber optic connector. The invisible light transmitter is configured to emit a first invisible light toward the fiber optic connector and includes a first connection element. The invisible light receiver is configured to receive a second invisible light from the fiber optic connector and includes a second connection element. The visible light transmitter is configured to emit a visible light toward the fiber optic connector. One of the first connection element and the second connection element is a flexible printed circuit board.

## Description

### BACKGROUND OF THE INVENTION

### Field of the Invention

The invention relates in general to an optical transmission and reception carrier.

### Description of the Related Art

An optical network terminal (ONT) is a device configured to communicate with a local end device (usually called an optical line terminal, OLT) of a telecom operator's passive optical network (PON). It mainly has the following functions: converting the passive optical network signal of the user terminal into the electrical signal of the device used by the telecom operator, and coordinating the multiplexing between optical network units. However, the optical network terminal is usually installed in a home space, and there is a low-voltage enclosure between the optical network terminal and the local end device, and the low-voltage enclosure is also installed in the home space. In addition, there is generally at least one to two kilometers of wiring between the optical network terminal and the low-voltage enclosure, and the length of the wiring between the low-voltage enclosure and the local end device (usually outside the building) will need to be longer (depending on the size of the building). Therefore, when the network is unavailable, the maintenance technician of the telecom operator needs to enter the home space for checking the problem and fixing it. In addition, the two sections of wiring, which are several kilometers in length, must be tested separately for performing the wiring fault detection. Currently, passive optical network products are mainly used in wide-area regions, where on-site troubleshooting requires sending technicians to homes, leading to high labor and financial costs.

In addition, in the past, the conventional method used to detect wiring problems between the optical fiber terminal device and the low-voltage enclosure is to remove the line from the optical network terminal and the low-voltage enclosure, and then use a potable visual fault locator (VFL), such as a portable red-light detection pen, to inject a red light from one of the two ends of the wiring. In theory, when the optical fiber line is damaged, the red light will accumulate there, so the red light spots may be seen from the outer surface of the wiring. That is, when the line is intact (without damage), theoretically no red light should be seen on the wiring surface, and a clear red light may be seen at the other end of the wiring. However, due to the long detection distance, the red light of the red-light detection pen itself becomes divergent, and there is a serious problem of light attenuation. Therefore, the red light of the red-light detection pen will naturally form on the surface of the wiring due to divergence, and it results in the inability to correctly determine whether the red light generated on the surface of the wiring due to the wiring damage or the red light divergence. In addition, due to the problem of the serious light attenuation, even if the wiring is intact, the red light emitted at the other end of the wiring will be unclear, and it results in the problem that the detection technician cannot accurately determine whether the wiring is damaged. Moreover, due to the longer transmission distance between the low-voltage enclosure and the telecom central office equipment, higher-end testing instruments-beyond basic red light detectors-are required for proper inspection; otherwise, the previously mentioned issues still occur.

### SUMMARY OF THE INVENTION

The present disclosure relates to an optical fiber terminal device and an optical transmission and reception carrier thereof, which may improve the aforementioned conventional issues.

According to an embodiment of the present invention, an optical transmission and reception carrier is provided. The optical transmission and reception carrier includes an optical fiber connector, an invisible light transmitter, an invisible light receiver and a visible light transmitter. The invisible light transmitter is configured to emit a first invisible light toward the optical fiber connector and includes a first connection element. The invisible light receiver is configured to receive a second invisible light from the optical fiber connector and includes a second connection element. The visible light transmitter is configured to emit a visible light toward the optical fiber connector. One of the first connection element and the second connection element is a flexible printed circuit board.

According to another embodiment of the present invention, an optical fiber terminal device is provided. The optical fiber terminal device includes a light source driver and an optical transmission and reception carrier. The optical transmission and reception carrier includes an optical fiber connector, an invisible light transmitter, an invisible light receiver and a visible light transmitter. The invisible light transmitter is configured to emit a first invisible light toward the optical fiber connector and includes a first connection element, wherein the first connection element is electrically connected to the light source driver. The invisible light receiver is configured to receive a second invisible light from the optical fiber connector and includes a second connection element, wherein the second connection element is electrically connected to the light source driver. The visible light transmitter is configured to emit a visible light toward the optical fiber connector. One of the first connection element and the second connection element is a flexible printed circuit board.

According to another embodiment of the present invention, an optical fiber transmission wiring is provided. The optical fiber transmission wiring includes an optical fiber, an invisible light transmitter, an invisible light receiver, a visible light transmitter and an optical fiber connector. The optical fiber has a first end and a second end. The invisible light transmitter is disposed adjacent to the first end and configured to emit a first invisible light. The invisible light receiver is disposed adjacent to the first end and configured to receive a second invisible light. The visible light transmitter is disposed adjacent to the first end and configured to emit a visible light. The optical fiber connector is connected to the second end.

According to another embodiment of the present invention, an optical fiber terminal device is provided. The optical fiber terminal device includes an optical fiber transmission wiring, a driving current circuit and a processor. The optical fiber transmission wiring includes an optical fiber, an invisible light transmitter, an invisible light receiver, a visible light transmitter and an optical fiber connector. The optical fiber has a first end and a second end. The invisible light transmitter is disposed adjacent to the first end and configured to emit a first invisible light. The invisible light receiver is disposed adjacent to the first end and configured to receive a second invisible light. The visible light transmitter is disposed adjacent to the first end and configured to emit a visible light. The optical fiber connector is connected to the second end. The driving current circuit is electrically connected to the visible light transmitter. The processor is electrically connected to the driving current circuit and configured to control the driving current circuit to drive the visible light transmitter.

The above and other aspects of the invention will become better understood with regard to the following detailed description of the preferred but non-limiting embodiment (s). The following description is made with reference to the accompanying drawings.

### BRIEF DESCRIPTION OF THE DRAWINGS

FIG. 1 is a schematic diagram of an optical fiber terminal device according to an embodiment of the present invention installed in a home space;
FIG. 2 is a functional block diagram of the optical fiber terminal device in FIG. 1;
FIG. 3 is a schematic diagram of an optical fiber transmission wiring of the optical fiber terminal device in FIG. 2;
FIG. 4 is a partial schematic diagram of the optical fiber transmission wiring in FIG. 3;
FIG. 5 is a functional block diagram of an optical fiber terminal device according to another embodiment of the present invention;
FIG. 6 is a partial schematic diagram of an optical transmission and reception carrier of FIG. 5;
FIG. 7 is a three-dimensional schematic diagram of the optical transmission and reception carrier in FIG. 5; and
FIG. 8 is a schematic diagram of the optical transmission and reception carrier in FIG. 7 connected to a main circuit board.

### DETAILED DESCRIPTION OF THE INVENTION

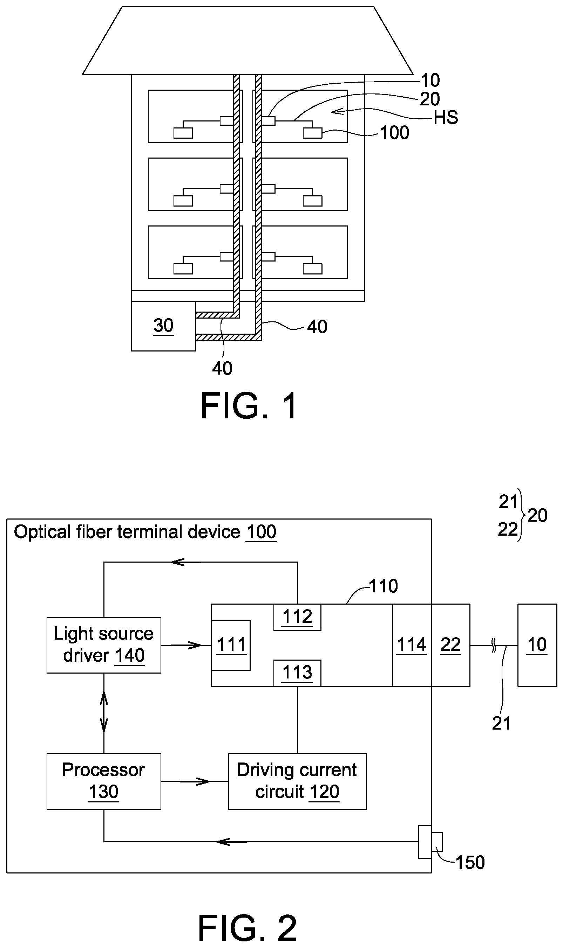

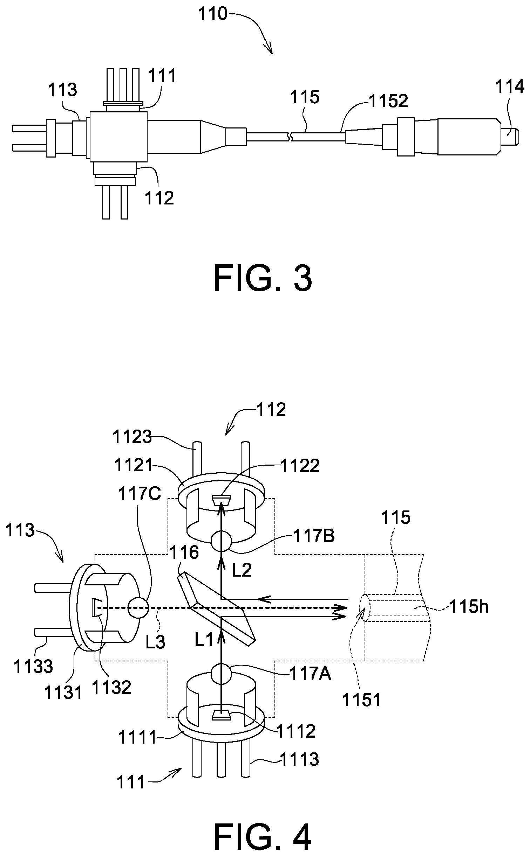

Referring to FIGS. 1 to 4, FIG. 1 is a schematic diagram of an optical fiber terminal device 100 according to an embodiment of the present invention installed in a home space HS, FIG. 2 is a functional block diagram of the optical fiber terminal device 100 in FIG. 1, FIG. 3 is a schematic diagram of an optical fiber transmission wiring 110 of the optical fiber terminal device 100 in FIG. 2, and FIG. 4 is a partial schematic diagram of the optical fiber transmission wiring 110 in FIG. 3.

As shown in FIGS. 1 and 2, the optical fiber terminal device 100 may be configured in, for example, the home space HS. In an embodiment, the optical fiber terminal device 100 is, for example, an optical network terminal (ONT) product. The optical fiber terminal device 100 may exchange data between different networks or protocols. Furthermore, the optical fiber terminal device 100 is, for example, a gateway, a router, etc. The optical fiber terminal device 100 may be configured to implement the ITU-T standard of the Gigabit Passive Optical Network (GPON).

As shown in FIGS. 1 and 2, the optical fiber terminal device 100 may be electrically connected to the low-voltage enclosure 10 through a transmission wiring module 20. The transmission wiring module 20 includes an optical fiber transmission wiring 21 and an optical fiber connector 22, wherein the optical fiber connector 22 is connected to the optical fiber terminal device 100. The optical fiber connector 22 is, for example, an SC/UPC optical fiber connector. The low-voltage enclosure 10 and the optical fiber terminal device 100 may exchange signals (data, commands, etc.) through the transmission wiring module 20. The low-voltage enclosure 10 and the regional operation device 30 may be connected through wiring 40 (for example, an optical fiber wiring) to exchange signals. The regional operation device 30 is, for example, a device deployed by a telecommunications operator outside the home space HS, such as a distribution box in the whole building.

As shown in FIGS. 2 to 4, the optical fiber terminal device 100 includes the optical fiber transmission wiring 110, a driving current circuit 120, a processor 130, a light source driver 140, and a trigger 150. The driving current circuit 120, the processor 130 and the light source driver 140 are, for example, integrated circuits formed by semiconductor processes, such as semiconductor chips, semiconductor packages, etc. In an embodiment, at least two of the driving current circuit 120, the processor 130 and the light source driver 140 may be integrated into a single component. The trigger 150 is, for example, a switch, a button, etc.

As shown in FIGS. 2 to 4, the optical fiber transmission wiring 110 includes an invisible light transmitter 111, an invisible light receiver 112, a visible light transmitter 113, an optical fiber connector 114, an optical fiber 115, a wavelength division multiplexer 116, a first lens 117A, a second lens 117B and a third lens 117C. The optical fiber 115 has a first end 1151 and a second end 1152. The invisible light transmitter 111 is disposed adjacent to the first end 1151 and is configured to emit a first invisible light L1. The invisible light receiver 112 is disposed adjacent to the first end 1151 and is configured to receive a second invisible light L2. The visible light transmitter 113 is disposed adjacent to the first end 1151 and is configured to emit a visible light L3. The optical fiber connector 114 is connected to the second end 1152. As a result, through the visible light L3, it is possible to detect whether the transmission wiring module 20 between the optical fiber terminal device 100 and the low-voltage enclosure 10 and/or the wiring 40 between the low-voltage enclosure 10 and a regional operating device 30 is failed (for example, has a defect or a fault).

Furthermore, if the transmission wiring module 20 between the optical fiber terminal device 100 and the low-voltage enclosure 10 is not failed, the visible light L3 may be normally transmitted to the low-voltage enclosure 10 through the transmission wiring module 20. In an embodiment, the low-voltage enclosure 10 includes a beam splitter (not shown) and an observation hole (not shown), and the beam splitter is configured to guide the visible light L3 to the observation hole. If the transmission wiring module 20 between the optical fiber terminal device 100 and the low-voltage enclosure 10 is not failed, the visible light L3 may be observed (through the naked eye) from the observation hole. If the transmission wiring module 20 between the optical fiber terminal device 100 and the low-voltage enclosure 10 is failed, the visible light L3 cannot be observed from the observation hole. Since the optical fiber terminal device 100 itself may emit visible light L3, the maintenance technician of the telecommunications operator do not need to enter the home space HS to perform the wiring fault detection (failure detection), and the resident in the home space HS may detect the fault through the observation hole of the low-voltage enclosure 10. In another embodiment, based on the similar principle, if the wiring 40 between the low-voltage enclosure 10 and the regional operation device 30 is not failed, the visible light L3 may be observed from the regional operation device 30. If the wiring 40 between the low-voltage enclosure 10 and the regional operation device 30 is failed, the visible light L3 cannot be observed from the regional operation device 30.

In another embodiment, the system may automatically determine whether the wiring is failed. For example, the low-voltage enclosure 10 or the regional operation device 30 may be equipped with a light detector (not shown) for detecting the visible light L3. When the light detector detects the visible light L3, a notification signal is issued. The maintenance technician of the telecommunications operator may know the wiring status through the notification signal.

In an embodiment, the wavelength of the first invisible light L1, the wavelength of the second invisible light L2 and the wavelength of the visible light L3 are different. For example, the wavelength of the first invisible light L1 is 1310 nanometers (nm), the wavelength of the second invisible light L2 is 1490 nanometers, and the visible light L3 is, for example, red light, and its wavelength ranges, for example, between 620 nanometers and 750 nanometers. However, the wavelength of the invisible light in this article may be any wavelength outside the visible spectrum, and the embodiment of the present invention is not limited. In addition, the wavelength of the visible light L3 may be any wavelength in the visible spectrum, and the wavelength range of the visible light spectrum is, for example, between 360 nanometers and 830 nanometers. In an embodiment, the wavelength of the visible light L3 is, for example, 650 nm. Due to the wavelength design of the visible light L3, the visible light L3 will not interfere with the signal of the first invisible light L1 and the signal of the second invisible light L2.

As shown in FIG. 3, the optical fiber transmission wiring 110 has three connectors (the invisible light transmitter 111, the invisible light receiver 112 and the visible light transmitter 113), and thus it belongs to a module assembly with three-phase light source (for example, Tri-OSA (Triplexer Optical Subassembly)).

As shown in FIGS. 2 to 4, the invisible light transmitter 111 of the optical fiber transmission wiring 110 includes a first circuit board 1111, an invisible light source 1112, and at least one first pin 1113. The invisible light source 1112 is disposed on and electrically connected to the first circuit board 1111. The first pin 1113 is disposed on and electrically connected to the first circuit board 1111. The first pin 1113 may be electrically connected to the light source driver 140 for being controlled by the light source driver 140.

As shown in FIGS. 2 to 4, the invisible light receiver 112 of the optical fiber transmission wiring 110 includes a second circuit board 1121, a light receiving unit 1122 and at least one second pin 1123. The light receiving unit 1122 is disposed on and electrically connected to the second circuit board 1121. The second pin 1123 is disposed on and electrically connected to the second circuit board 1121. The second pin 1123 may be electrically connected to the light source driver 140 for being controlled by the light source driver 140.

As shown in FIGS. 2 to 4, the visible light transmitter 113 of the optical fiber transmission wiring 110 includes a third circuit board 1131, a visible light source 1132 and at least one third pin 1133. The visible light source 1132 is disposed on and electrically connected to the third circuit board 1131. The third pin 1133 is disposed on and electrically connected to the third circuit board 1131. The third pin 1133 may be electrically connected to the driving current circuit 120 for being controlled by the driving current circuit 120.

In the present embodiment, the first pin 1113, the second pin 1123 and the third pin 1133 are, for example, metal pins.

The first pin 1113, the second pin 1123 and the third pin 1133 of the optical fiber transmission wiring 110 may be electrically connected to a main circuit board (not shown) of the optical fiber terminal device 100. The aforementioned driving current circuit 120, the processor 130, the light source driver 140 and the trigger 150 may also be disposed on and electrically connected to the main circuit board (not shown) of the optical fiber terminal device 100. The optical fiber connector 114 of the optical fiber transmission wiring 110 may be exposed from the housing (not shown) of the optical fiber terminal device 100 for receiving the connection (for example, insertion) of the optical fiber connector 22 of the transmission wiring module 20. In an embodiment, the optical fiber connector 114 includes a standard connector (SC), an angled physical contact (APC) and an ultra physical contact (UPC).

As shown in FIG. 4, the first end 1151 of the optical fiber 115 is disposed adjacent to the invisible light transmitter 111, the invisible light receiver 112, and the visible light transmitter 113. The optical fiber 115 includes a fiber core 115h located inside the optical fiber 115 for transmitting the first invisible light L1, the second invisible light L2, and the visible light L3. The fiber core 115h is made of glass or plastic. The first invisible light L1, the second invisible light L2, and the visible light L3 performs the total internal reflection in the fiber core to achieve the purpose of long-distance transmission. In an embodiment, the optical fiber 115 is a single-mode fiber (SMF), and the fiber core 115h has a diameter ranging between 8 micrometers (µm) and 10 micrometers. The first invisible light L1 may be incident on an end face of the first end 1151 of the optical fiber 115, and after entering the fiber core 115h, the first invisible light L1 is transmitted to the low-voltage enclosure 10 through the optical fiber 115. The second invisible light L2 (for example, from the low-voltage enclosure 10) is transmitted to the invisible light receiver 112 through the fiber core 115h of the optical fiber 115. The visible light L3 may be incident on the end face of the first end 1151 of the optical fiber 115, and after entering the fiber core 115h, the visible light L3 is transmitted to the low-voltage enclosure 10 through the optical fiber 115.

As shown in FIG. 4, the wavelength division multiplexer 116 is configured to guide the first invisible light L1 and the visible light L3 to the first end 1151 of the optical fiber 115, and to guide the second invisible light L2 to the invisible light receiver 112. In an embodiment, the wavelength division multiplexer 116 includes a dielectric filter, an interference filter, an arrayed waveguide grating (AWG) or a fiber Bragg grating (FBG), and the wavelength division multiplexer 116 is configured to reflect the invisible light L1 and the second invisible light L2, and to allow the visible light L3 to travel through. Furthermore, the wavelength division multiplexer 116 may reflect the first invisible light L1 to the first end 1151 of the optical fiber 115, reflect the second invisible light L2 to the invisible light receiver 112, and allow the visible light L3 to travel through and incident into the first end 1151 of the optical fiber 115.

As shown in FIG. 4, the first end 1151 of the optical fiber 115 and the invisible light source 1112 face the wavelength division multiplexer 116, and the wavelength division multiplexer 116 may reflect the first invisible light L1 emitted by the invisible light source 1112 to the optical fiber 115. The first end 1151 of the optical fiber 115 and the light receiving unit 1122 face the wavelength division multiplexer 116, and the wavelength division multiplexer 116 may reflect the second invisible light L2 from the optical fiber 115 to the light receiving unit 1122. The visible light source 1132, the wavelength division multiplexer 116 and the first end 1151 are arranged in a straight line, so that the visible light L3 emitted by the visible light source 1132 is incident on the optical fiber 115 after traveling through the wavelength division multiplexer 116.

As shown in FIG. 4, the first lens 117A corresponds to the invisible light source 1112 which is a laser diode (LD). The first invisible light L1 emitted by the invisible light source 1112 is a coherent light, such as laser infrared light. Through the first lens 117A, the first invisible light L1 may be incident more accurately into the fiber core 115h of the optical fiber 115. The second lens 117B corresponds to the light receiving unit 1122, and the second invisible light L2 is the coherent light, such as laser infrared light. Through the second lens 117B, the second invisible light L2 may be incident more concentratedly into the light receiving unit 1122. The third lens 117C corresponds to the visible light source 1132 which is a light emitting diode. The visible light L3 emitted by the visible light source 1132 is an incoherent light, such as red light. Through the third lens 117C, the visible light L3 may be more concentratedly and accurately incident into the fiber core 115h of the optical fiber 115, and it may reduce the speed of the energy attenuation of the visible light L3 and increase the transmission distance of the visible light L3. Compared with the light emitted by the conventional red-light detection pen which cannot accurately enter the fiber core 115h of the optical fiber 115, the visible light L3 generated by the optical fiber transmission wiring 110 of the embodiment of the present invention may be more accurately and more concentratedly incident into the fiber core 115h of the optical fiber 115, and thus it increases the transmission distance of the visible light L3 and improve the accuracy of debugging.

The following Table 1 lists the performance of the optical fiber terminal device 100 of the embodiment of the present invention. The length in Table 1 represents the length of the transmission wiring module 20, the input power represents the power of the visible light L3 emitted by the optical fiber terminal device 100, and the attenuation represents the power attenuation of the visible light L3 emitted by the optical fiber terminal device 100 after traveling through the transmission wiring module 20. The greater the value is, the greater the attenuation is.

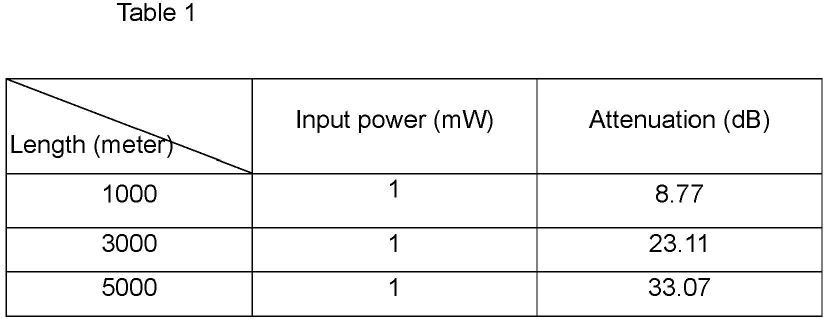

Table 2 below lists the performance of the conventional red-light detection pen. The length in Table 2 represents the length of the transmission wiring module 20, the input power represents the power of the red light emitted by the red-light detection pen, and the attenuation represents the power attenuation of the red light emitted by the red-light detection pen after traveling through the transmission wiring module 20. The greater the value is, the greater the attenuation is.

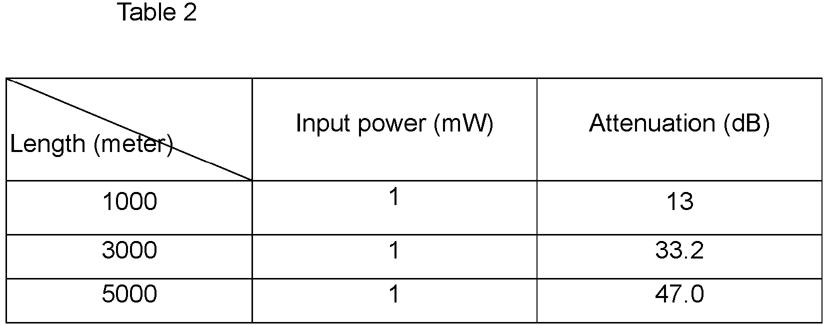

Comparing Table 1 and Table 2, it may be seen that under the same length of the single-mode fiber and the same optical input power, compared with the power attenuation of the red light emitted by the conventional red-light detection pen, the power attenuation of the visible light L3 emitted by the optical fiber terminal device 100 of the embodiment of the present invention is less. In an embodiment, the power of the visible light L3 emitted by the optical fiber terminal device 100 ranges between 1 microwatt (mW) and 3 mW.

In another embodiment, the optical fiber 115 is a multimode optical fiber (MMF), the fiber core 115h has a diameter ranging between 50 µm and 62.5 µm, the first invisible light L1 and the second invisible light L2 are coherent light or incoherent light, and the wavelengths of the first invisible light L1 and the second invisible light L2 range between 850 nm and 1300 nm. The visible light L3 is the incoherent light, such as red light, which is concentratedly and accurately incident into the fiber core 115h of the optical fiber 115 through the third lens 117C.

As shown in FIG. 2, the driving current circuit 120 is electrically connected to the visible light transmitter 113 and configured to drive the visible light transmitter 113. In an embodiment, the driving current circuit 120 and the processor 130 may communicate through GPIO (general-purpose input/output) technology and/or PWM (pulse width modulation).

As shown in FIG. 2, the processor 130 is electrically connected to the driving current circuit 120 and configured to control the driving current circuit 120 to drive the visible light transmitter 113. In an embodiment, the processor 130 is, for example, a central processing unit (CPU). In addition, the processor 130 is electrically connected to the light source driver 140 and configured to control the light source driver 140 to drive the invisible light transmitter 111.

As shown in FIGS. 2 and 4, the light source driver 140 is electrically connected to the invisible light transmitter 111 and the invisible light receiver 112. The light source driver 140 may drive the invisible light transmitter 111 to emit the first invisible light L1. The light source driver 140 may transmit the signal of the second invisible light L2 received by the invisible light receiver 112 to the processor 130. In an embodiment, the light source driver 140 is, for example, a laser diode driver (LDD).

As shown in FIG. 2, the trigger 150 is exposed from the housing (not shown) of the optical fiber terminal device 100 to receive an external input command (for example, a trigger action of the user). The trigger 150 is electrically connected to the processor 130. When the trigger 150 is triggered, the processor 130 accordingly controls the driving current circuit 120 to drive the visible light transmitter 113 for emitting the visible light L3 to perform the aforementioned wiring fault detection. The trigger 150 and the processor 130 may communicate through the GPIO.

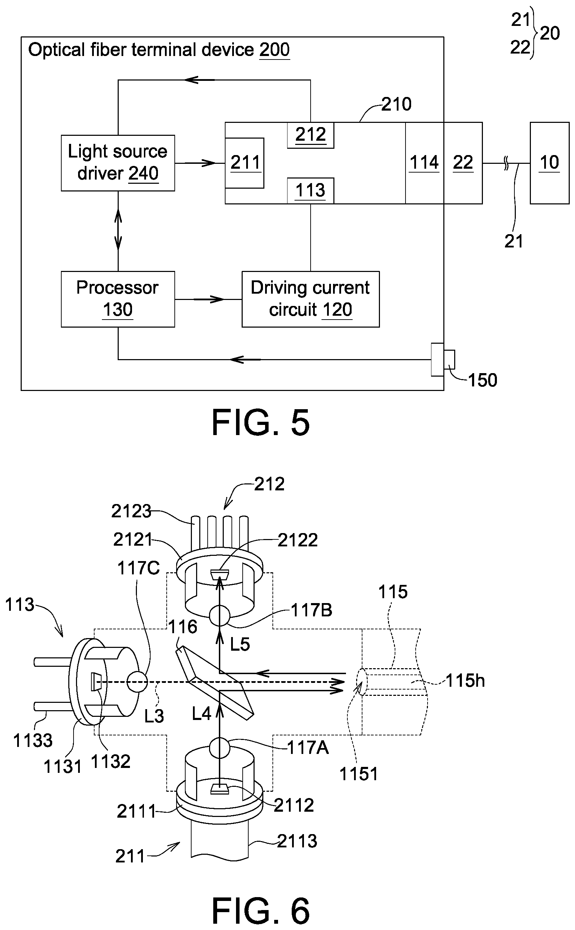

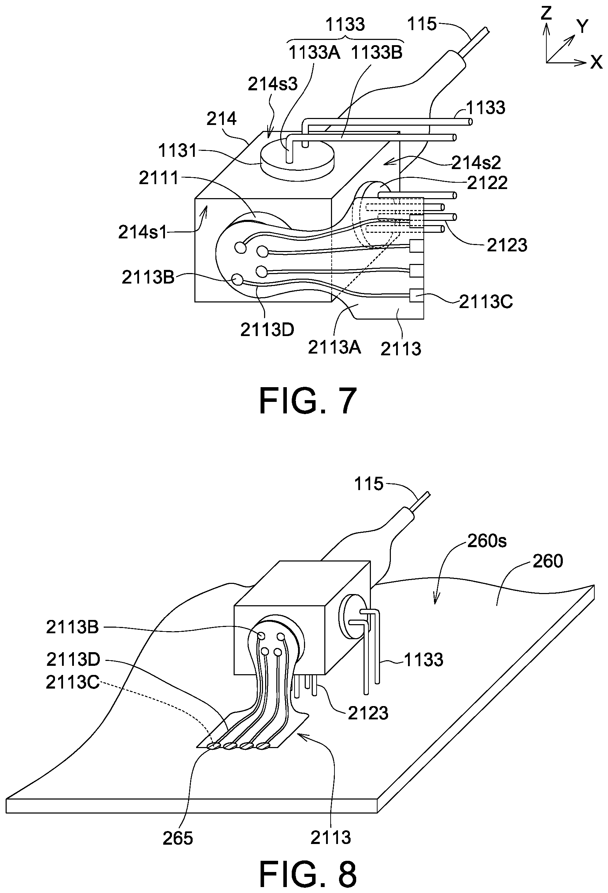

Referring to FIGS. 5 to 8, FIG. 5 is a functional block diagram of an optical fiber terminal device 200 according to another embodiment of the present invention, FIG. 6 is a partial schematic diagram of an optical transmission and reception carrier 210 of FIG. 5, FIG. 7 is a three-dimensional schematic diagram of the optical transmission and reception carrier 210 in FIG. 5, and FIG. 8 is a schematic diagram of the optical transmission and reception carrier 210 in FIG. 7 connected to a main circuit board 260.

In an embodiment, the optical fiber terminal device 100 in FIG. 1 may be replaced by an optical fiber terminal device 200.

As shown in FIGS. 5 and 6, the optical fiber terminal device 200 includes the optical transmission and reception carrier 210, the driving current circuit 120, the processor 130, a light source driver 240 and a trigger 150, and the optical transmission and reception carrier 210, the driving current circuit 120, the processor 130, the light source driver 240 and the trigger 150 are disposed on the main circuit board 260 (the main circuit board 260 is shown in FIG. 8). The optical transmission and reception carrier 210 has similar functions and the same uses as the aforementioned optical fiber transmission wiring 110. The driving current circuit 120, the processor 130 and the light source driver 240 are, for example, integrated circuits formed by semiconductor processes, such as semiconductor chips, semiconductor packages, etc. In an embodiment, at least two of the driving current circuit 120, the processor 130 and the light source driver 240 may be integrated into a single component.

As shown in FIGS. 1, 5 and 6, the optical transmission and reception carrier 210 includes an invisible light transmitter 211, an invisible light receiver 212, the visible light transmitter 113, the optical fiber connector 114, the optical fiber 115, the wavelength division multiplexer 116, the first lens 117A, the second lens 117B and the third lens 117C. In an embodiment, the invisible light transmitter 211 is configured to emit a first invisible light L4 toward the optical fiber connector 114 and includes at least one first connection element 2113. The invisible light receiver 212 is configured to receive a second invisible light L5 from the optical fiber connector 114 and includes at least one second connection element 2123. The visible light transmitter 113 is configured to emit the visible light L3 toward the optical fiber connector 114. In an embodiment, one of the first connection element 2113 and the second connection element 2123 is a flexible printed circuit. For example, the first connection element 2113 is a flexible printed circuit (FPC), and the second connection element 2123 is a pin. Compared to the pin, the flexible printed circuit is softer and more flexible and has a lower signal attenuation rate than the pin. In the present embodiment, the pin includes a metal pin, or the pin itself is a metal pin.

In an embodiment, as shown in FIGS. 1 and 5, through the visible light L3, it is possible to detect whether the transmission wiring module 20 between the optical fiber terminal device 200 and the low-voltage enclosure 10 and/or the wiring 40 between the low-voltage enclosure 10 and the regional operating device 30 is failed (for example, has a defect or a fault).

Furthermore, if the transmission wiring module 20 between the optical fiber terminal device 200 and the low-voltage enclosure 10 is not failed, the visible light L3 may be normally transmitted to the low-voltage enclosure 10 through the transmission wiring module 20. In an embodiment, the low-voltage enclosure 10 includes the beam splitter (not shown) and the observation hole (not shown), and the beam splitter is configured to guide the visible light L3 to the observation hole. If the transmission wiring module 20 between the optical fiber terminal device 100 and the low-voltage enclosure 10 is not failed, the visible light L3 may be observed (through the naked eye) from the observation hole. If the transmission wiring module 20 between the optical fiber terminal device 100 and the low-voltage enclosure 10 is failed, the visible light L3 cannot be observed from the observation hole. Since the optical fiber terminal device 200 itself may emit visible light L3, the maintenance technician of the telecommunications operator do not need to enter the home space HS to perform the wiring fault detection (failure detection), and the resident in the home space HS may detect the fault through the observation hole of the low-voltage enclosure 10. In another embodiment, based on the similar principle, if the wiring 40 between the low-voltage enclosure 10 and the regional operation device 30 is not failed, the visible light L3 may be observed from the regional operation device 30. If the wiring 40 between the low-voltage enclosure 10 and the regional operation device 30 is failed, the visible light L3 cannot be observed from the regional operation device 30.

In an embodiment, the wavelength of the first invisible light L4, the wavelength of the second invisible light L5 and the wavelength of the visible light L3 are different. For example, the peak wavelength (Wp) of the first invisible light L4 ranges between 1260 nm and 1280 nm. In another embodiment, the peak wavelength of the first invisible light L4 ranges between 1265 nm and 1275 nm, for example, 1270 nm. The peak wavelength of the second invisible light L5 ranges between 1575 nm and 1580 nm, for example, 1577 nm, and the visible light L3 is, for example, red light, and its peak wavelength ranges between 620 nm and 750 nm, for example, 650 nm. However, the wavelength of the invisible light in this article may be any wavelength outside the visible spectrum, and the embodiment of the present invention is not limited thereto.

Due to the wavelength design of the first invisible light L4 and the second invisible light L5, the optical fiber terminal device 200 may provide a transmission rate between 9.9 Gbit/s and 10 Gbit/s. In an embodiment, the optical fiber terminal device 200 may support the XGS-PON standard. XGS-PON belongs to the passive optical network (PON) standard that may provide 10 Gbps symmetrical data transmission, that is, the upstream rate and the downstream rate are both between 9.9 Gbit/s and 10 Gbit/s. In addition, the wavelength of the visible light L3 may be any wavelength in the visible light spectrum, and the wavelength range of the visible light spectrum is, for example, between 360 nm and 830 nm. In an embodiment, the wavelength of the visible light L3 is, for example, 650 nm. Due to the wavelength design of the visible light L3, the visible light L3 will not interfere with the signals of the first invisible light L4 and the second invisible light L5.

As shown in FIG. 5, the invisible light transmitter 211 of the optical transmission and reception carrier 210 includes a first circuit board 2111, an invisible light source 2112 and the aforementioned first connection element 2113. The invisible light source 2112 is disposed on and electrically connected to the first circuit board 2111. The first connection element 2113 is disposed on and electrically connected to the first circuit board 2111. The first connection element 2113 may be electrically connected to the light source driver 240 for being controlled by the light source driver 240.

As shown in FIG. 5, the invisible light receiver 212 of the optical transmission and reception carrier 210 includes a second circuit board 2121, a light receiving unit 2122 and the aforementioned second connection element 2123. The light receiving unit 2122 is disposed on and electrically connected to the second circuit board 2121. The second connection element 2123 is disposed on and electrically connected to the second circuit board 2121. The second connection element 2123 may be electrically connected to the light source driver 240 for being controlled by the light source driver 240. In the present embodiment, the second connection element 2123 is, for example, a pin. In another embodiment, the second connection element 2123 may be a flexible circuit board, such as a flexible flat cable.

In another embodiment, the first connection element 2113 and the second connection element 2123 are both flexible printed circuits. Alternatively, one of the first connection element 2113 and the second connection element 2123 is the flexible printed circuit, and the other of the first connection element 2113 and the second connection element 2123 is the pin.

As shown in FIG. 7, the optical transmission and reception carrier 210 further includes a housing 214, the housing 214 has a first lateral surface 214s1, a second lateral surface 214s2 and a third lateral surface 214s3, wherein the first lateral surface 214s1, the second lateral surface 214s2 and the third lateral surface 214s3 are connected adjacent to each other, wherein the invisible light transmitter 211, the invisible light receiver 212, the visible light transmitter 113, the wavelength division multiplexer 116, the first lens 117A, the second lens 117B and the third lens 117C are disposed in the housing 214, and the first connection element 211, the second connection element 2123 and the third pin 1133 are exposed outside the housing 214 and connected to the main circuit board 260 (shown in FIG. 8). The first connection element 2113 extends outward relative to the first lateral surface 214s1, the second connection element 2123 extends outward relative to the second lateral surface 214s2, and the third pin 1133 extends outward relative to the third lateral surface 214s3. In addition, the first circuit board 2111 is located on the first lateral surface 214s1, the second circuit board 2122 is located on the second lateral surface 214s2, and the third circuit board 1131 is located on the third lateral surface 214s3, and the first circuit board 2111, the second circuit board 2122 and the third circuit board 1131 are disposed, for example, perpendicular to each other.

As shown in FIG. 7, the first connection element 2113 includes a substrate 2113A, at least one contact 2113B, at least one pad 2113C and at least one connecting line 2113D, wherein the contact 2113B, the pad 2113C and the connecting line 2113D are formed on the substrate 2113A. The substrate 2113A is, for example, a flexible substrate. The contact 2113B may be electrically connected to the first circuit board 2111, and the connecting line 2113D may connect the contact 2113B with the pad 2113C to electrically connect the contact 2113B with the pad 2113C.

As shown in FIG. 7, in the present embodiment, the second connection element 2123 extends along a straight line. For example, the second connection element 2123 extends along a first direction (for example, X-axis) and does not have a bent shape. The third pin 1133 is, for example, an L-shaped pin, that is, the third pin 1133 has a bent shape. For example, the third pin 1133 includes a first portion 1133A and a second portion 1133B connected to each other, wherein the first portion 1133A protrudes relative to the third lateral surface 214s3 and extends along the second direction (for example, Z-axis), and the second portion 1133B extends from the first portion 1133A along the first direction. Due to the second portion 1133B of the third pin 1133 and the second connection element 2123 extending in the same direction, they may be connected to the same surface of the main circuit board 260 (the main circuit board 260 is shown in FIG. 8). In another embodiment, the third pin 1133 can be replaced by a third connection element, wherein the third connection element comprises a flexible circuit board (not shown), such as a flexible flat cable (FFC). The function and electrical characteristics of the third connection element are identical or similar to those of the third pin 1133. The flexible circuit board structure of the third connection element is similar to that of the first connection element 2113.

As shown in FIG. 8, the first connection element 2113, the second connection element 2123 and the third pin 1133 of the optical transmission and reception carrier 210 may be electrically connected to the main circuit board 260 of the optical fiber terminal device 200. The aforementioned driving current circuit 120, the processor 130, the light source driver 240 and the trigger 150 may also be disposed on and electrically connected to the main circuit board 260 of the optical fiber terminal device 200. The optical fiber connector 114 of the optical transmission and reception carrier 210 may be exposed from the housing 214 of the optical fiber terminal device 200 for receiving the connection (for example, insertion) of the optical fiber connector 22 of the transmission wiring module 20.

As shown in FIG. 8, the third pin 1133 may be inserted into and electrically connected to the main circuit board 260. For example, the second portion 1133B of the third pin 1133 may be inserted into a surface 260s of the main circuit board 260. The second portion 1133B is, for example, substantially perpendicular to the surface 260s of the main circuit board 260. The surface 260s is, for example, an upper surface or a lower surface of the main circuit board 260. The second connection element 2123 may be inserted into the surface 260s of the main circuit board 260. The second connection element 2123 is, for example, substantially perpendicular to the surface 260s of the main circuit board 260. In addition, due to the second connection element 2123 being flexible, the second connection element 2123 may be bent and abut against the main circuit board 260. Compared with the bent pin, due to the second connection element 2123 of the present embodiment being a flexible circuit board, the attenuation of the electrical signal is still less even if the second connection element 2123 is connected to the main circuit board 260 in a curved manner. In addition, the optical fiber terminal device 200 further includes at least one solder point 265 which solders the pad 2113C of the first connection element 2113 and the pad (not shown) of the main circuit board 260.

Compared with the second connection element 2123 and the bendable third pin 1133 shown in FIG. 8, which are able to be inserted into the main circuit board 260. In another embodiment, the second connection element 2123 can be a flexible circuit board (not shown), and the third pin 1133 can be replaced by a third connection element comprising a flexible circuit board (not shown). The function and electrical characteristics of the third connection element are identical or similar to those of the third pin 1133. The structures of the flexible circuit board of the second connection element 2123 and the third connection element are similar or identical to that of the first connector 2113. The second and third connection elements can be electrically connected to the main circuit board 260 by soldering, thereby increasing the flexibility of mounting the reception carrier 210 on the main circuit board 260 and reducing installation costs.

In summary, the embodiment of the present invention proposes an optical fiber terminal device and an optical transmission and reception carrier thereof, and the optical transmission and reception carrier itself includes a visible light transmitter. The visible light transmitter is configured to emit a visible light, and through the present invention, the visible light has the characteristics of concentration and low attenuation rate. Therefore, only when the optical fiber has the defect (for example, failure), a visible light spot will be found on the surface of the optical fiber, and when the optical fiber is intact (for example, without the defect), the visible light emitted from the end surface of the optical fiber may be clearly seen (or observed). As a result, it greatly improves the accuracy of optical fiber failure detection and reduces the difficulty of operation, and truly solves the problems caused by the conventional technology, so that the human resources and money costs for wiring detection may be greatly reduced. In another embodiment, the connection element of at least one of the invisible light transmitter and the invisible light receiver is, for example, a flexible circuit board. As a result, compared with the bent pins, even if the flexible circuit board is bent and connected to the main circuit board, the signal attenuation is still less.

While the invention has been described by way of example and in terms of the preferred embodiment (s), it is to be understood that the invention is not limited thereto. Based on the technical features embodiments of the present invention, a person ordinarily skilled in the art will be able to make various modifications and similar arrangements and procedures without breaching the spirit and scope of protection of the invention. Therefore, the scope of protection of the present invention should be accorded with what is defined in the appended claims.

## Claims

1. An optical transmission and reception carrier (210), wherein the optical transmission and reception carrier (210) comprises:
an optical fiber connector (114);
an invisible light transmitter (211), configured to emit a first invisible light (L4) toward the optical fiber connector (114) and comprising a first connection element (2113);
an invisible light receiver (212), configured to receive a second invisible light (L5) from the optical fiber connector (114) and comprising a second connection element (2123); and
a visible light transmitter (113), configured to emit a visible light (L3) toward the optical fiber connector (114);
wherein one of the first connection element (2113) and the second connection element (2123) is a flexible printed circuit board.

2. The optical transmission and reception carrier (210) as claimed in claim 1, wherein the first invisible light (L4) has a peak wavelength ranging between 1265 nanometers and 1275 nanometers, and the second invisible light (L5) has a peak wavelength ranging between 1575 nanometers and 1580 nanometers.

3. The optical transmission and reception carrier (210) as claimed in claim 1 or 2, the visible light (L3) has a wavelength ranging between 620 nanometers and 750 nanometers.

4. The optical transmission and reception carrier (210) as claimed in anyone of the claims 1 to 3, wherein the visible light transmitter (113) comprises a third connection element, and the third connection element is a flexible printed circuit board.

5. The optical transmission and reception carrier (210) as claimed in anyone of the claims 1 to 4, further comprising:
an optical fiber (115) having a first end (1151) and a second end (1152); and
a wavelength division multiplexer (116) configured to guide the first invisible light (L4) and the visible light (L3) to the first end (1151) and guide the second invisible light (L5) to the invisible light receiver (212).

6. The optical transmission and reception carrier (210) as claimed in claim 5, wherein the wavelength division multiplexer (116) allows the visible light (L3) to travel through, and the visible light transmitter (113), the wavelength division multiplexer (116) and the first end (1151) are arranged in a straight line.

7. The optical transmission and reception carrier (210) as claimed in claim 5 or 6, wherein the visible light transmitter (113) comprises:
a circuit board (260);
a visible light source (1132), disposed and electrically connected to the circuit board (260); and
a lens corresponding to the visible light source (1132) and configured to guide the visible light (L3) emitted by the visible light source (1132) to be concentratedly incident on the wavelength division multiplexer (116).

8. The optical transmission and reception carrier (210) as claimed in anyone of the claims 1 to 7, wherein the other of the first connection element (2113) and the second connection element (2123) is a pin extending along a straight line.

9. The optical transmission and reception carrier (210) as claimed in anyone of the claims 1 to 8, wherein the invisible light transmitter (211) comprises a first circuit board (2111), the invisible light receiver (212) comprises a second circuit board (2121), the visible light transmitter (113) comprises a third circuit board (1131), and the first circuit board (2111), and the second circuit board (2121) and the third circuit board (1131) are arranged perpendicular to each other.
